# EUROPÄISCHE PATENTSCHRIFT

(11) **EP 2 953 019 B1**
(45) Veröffentlichungstag und Bekanntmachung des Hinweises auf die Patenterteilung: **22.04.2020**
(21) Anmeldenummer: 15167282.1
(22) Anmeldetag: 12.05.2015
(51) Int. Cl.: G06F 3/12, G06K 15/02, H04N 1/00, H04N 1/32

(54) **VERFAHREN ZUR IDENTIFIKATION VON DRUCKKONTROLLELEMENTEN FÜR DIE QUALITÄTSDATENERFASSUNG**
METHOD FOR IDENTIFICATION OF PRINT CONTROL ELEMENTS FOR QUALITY DATA ACQUISITION
PROCEDE D'IDENTIFICATION D'ELEMENTS DE CONTROLE DE PRESSION POUR LA DETECTION DE DONNEES DE QUALITE

(30) Priorität: 05.06.2014 DE 102014210690
(43) Veröffentlichungstag der Anmeldung: 09.12.2015
(73) Patentinhaber: Heidelberger Druckmaschinen AG, 69115 Heidelberg (DE)
(72) Erfinder: Ratz, Georg, 76709 Kronau (DE)

(56) Entgegenhaltungen:
- US-A- 4 671 661
- US-A1- 2006 280 360
- US-A1- 2012 182 374

## Beschreibung

Die vorliegende Erfindung betrifft ein Verfahren und eine Vorrichtung zur Identifikation von Druckkontrollelementen für die Qualitätsdatenerfassung.

Die Erfindung liegt in dem technischen Gebiet des Qualitätsmanagements.

Der bisherige Stand der Technik umfasst zwei Hauptbereiche: Zum einen sind dies die bekannten Verfahren zur Durchführung einer Remote Qualitätskontrolle im Kundeneinsatz. Dabei ist es bisher üblich, dass die größeren Druckmaschinen über eine integrierte Qualitätskontrolle verfügen, so dass die mit ihnen hergestellten Druckprodukte im Betrieb automatisch auf die gewünschte Qualität hin kontrolliert werden. Dafür sind, vereinfacht formuliert, am Ende der Drucklinie eine oder mehrere Kameras angebracht, welche die hergestellten Druckprodukte einmalig als Bild oder fortlaufend aufnehmen. Die so erzeugten Bilder werden entweder lokal vom Steuerungsrechner der Druckmaschine ausgewertet, welcher über seine Anzeige- und Bedienelemente, wie z. B. einem Touchscreen oder einem Display, dem Benutzer die gefundenen Fehler anzeigt. Oder falls der Steuerungsrechner der Druckmaschine diese Aufgaben nicht übernehmen kann, werden die aufgenommenen Bilddaten über ein Netzwerk an einen externen Rechner weitergeleitet und die Auswertung geschieht dort. Der externe Rechner leitet dann die gefundenen Fehler über ein lokales oder über ein durch ein Netzwerk verbundenes externes Anzeigeelement an den Bediener der Druckmaschine weiter. Da diese integrierten Systeme einen erhöhten finanziellen Aufwand erfordern, werden sie üblicherweise nur bei großen und entsprechend teuren Druckmaschinen eingesetzt. Den zweiten Hauptbereich des Standes der Technik stellen daher die behelfsmäßigen Lösungen dar, auf welche bei kleineren und kostengünstigeren Systemen bisher zurückgegriffen wird. So ist es aus dem Stand der Technik bekannt, die Druckqualität solcher kleinerer Druckmaschinen durch den Einsatz von kleinen mobilen Messgeräten, wie z. B. Handdensitometern, vor Ort zu überprüfen. Dabei können mit diesen mobilen Geräten sowohl die Druckprodukte selbst, als auch die Kontrollelemente, wie z. B. Farbmessstreifen, untersucht werden. Eine weitere aus dem Stand der Technik bekannte Verfahrensweise besteht darin, gedruckte Druckkontrollelemente, bzw. Bildqualitätsfehler einzuscannen oder mittels einer Digitalkamera abzufotografieren und die so aufgenommenen Bilder dann per E-Mail an den zuständigen Supportservice weiterzuleiten. All diese Vorgehensweisen haben jedoch den Nachteil, dass die beschriebenen Untersuchungen von geschulten Servicemitarbeitern, z.B. des Druckmaschinenherstellers, durchgeführt werden müssen, da insbesondere in kleineren Druckereien beim dortigen Personal nicht das notwendige Fachwissen vorhanden ist, um die auszumessenden Prüfobjekte korrekt auszuwählen und zu untersuchen. Um diese Probleme zu lösen, bietet sich der Einsatz von handelsüblichen kamerafähigen Mobiltelefonen an, mit welchen die zu untersuchenden Messorte der Druckprodukte fotografiert und weitergeleitet werden können. Die Weiterleitung der Daten zum Supportcenter sollte dabei bevorzugt über die Datenschnittstelle des Mobiltelefons geschehen. Ein solches Verfahren ist auch von normalen Anwendern ohne größeres drucktechnisches Fachwissen durchführbar. Schwierigkeit bleibt jedoch auch hier, die Auswahl der zu untersuchenden Messorte, sowie die verfahrensgerechte Durchführung der Bildaufnahme, um vom Supportcenter verwertbare Kontrollaufnahmen zu erhalten. Ein weiteres Problem bei dieser Vorgehensweise ist, dass die so aufgenommen Bilder für eine schnelle und effiziente, d.h. automatische, Auswertung nur schwer systematisch einzuordnen sind. Denn neben allgemeinen Informationen über Zeit und Ort der Aufnahme sind zu einer automatisierten Auswertung auch Informationen über die Druckmaschine (z.B. anhand der Seriennummer), den Druckauftrag, die Art des Druckkontrollelements, die relative Position des Druckkontrollelements auf dem Bogen etc. erforderlich. Diese Informationen müssen vom Anwender dem aufgenommenen Bild hinzugefügt werden, was zum Einen zeitlichen Aufwand bedeutet und zum Anderen wiederum technisches Fachwissen erfordert, was dem eigentlichen Ziel eines einfachen, auch ohne größeres Fachwissen durchzuführenden, Verfahrens widerspricht.

Die US-Patentanmeldung US 2012 0182374 A1 offenbart dabei ein System zur Druckqualitätskontrolle, welches mittels in einer Druckqualitätsbewertungseinheit integrierten CCD-Kamera, Teile des bedruckten Drucksubstrates erfasst und dann rechnergestützt hinsichtlich der erreichten Druckqualität auswertet.

Aus der US-Patentanmeldung US 2006 0280360 A1 wiederum ist eine Vorrichtung zur Kalibrierung von Geräten zum Rendern bekannt, welche ein mobiles Kalibrierungsgerät und die Verwendung von Barcodes und Identifizierungsnummern offenbart.

Das US-Patent US 4,671,661 dagegen offenbart die Verwendung von aufgedruckten Barcodes zu Identifikationszwecken im Zusammenhang mit qualitätssteigernden Maßnahmen bei Druckprodukten.

Die Aufgabe der vorliegenden Erfindung besteht somit darin, ein kostengünstiges Verfahren sowie eine Vorrichtung zur Durchführung einer Remote-Druckqualitätsanalyse zu beschreiben, welches von einem Anwender ohne drucktechnisches Fachwissen durchgeführt werden kann und in dem sämtliche zur Durchführung des Verfahrens notwendigen Informationen automatisch mit erfasst werden.

Die erfindungsgemäße Lösung dieser Aufgabe stellt ein Verfahren mit den Merkmalen von Hauptanspruch 1 dar. Es handelt sich dabei um ein Verfahren zur Identifikation von Druckkontrollelementen für die Qualitätsdatenerfassung.

Der maschinenlesbare Datencode kann dabei aus einem QR-Code, einem Barcode, einem Datamatrixcode oder ähnlichen Datencodes bestehen. Zudem muss er mittels aus dem Stand der Technik bekannter OCR-Verfahren verarbeitet werden können.

Vorteilhafte und daher bevorzugte Weiterbildungen des Verfahrens ergeben sich aus den zugehörigen Unteransprüchen.

Eine bevorzugte Weiterbildung des erfindungsgemäßen Verfahrens ist dabei, dass zusätzlich zum maschinenlesbaren Datencode (2), zum Identifikationscode (3) und zum Druckkontrollelement (8) auch der gedruckte Nutzen (4) und zum Identifikationscode (3) auch der Nutzen (4) mit in die Qualitätsdatenerfassung einbezogen wird. Dies macht insbesondere dann Sinn, wenn Qualitätsmängel nur im gedruckten Nutzen auftauchen und nicht auch im Druckkontrollelement.

Eine bevorzugte Weiterbildung des erfindungsgemäßen Verfahrens ist dabei, dass es sich bei der Kommunikationsschnittstelle des mobilen Kommunikationsmittels um eine drahtlose Datenübertragung, insbesondere nach einem Mobilfunkstandard, handelt. Durch Benutzung der, bei jedem heute handelsüblichen kamerafähigen Mobiltelefons, vorhandenen Datenschnittstellen, wie z. B. WLAN, Bluetooth oder UMTS/LTE, können die Bildaufnahmen zu einem vernetzten Rechner, welcher die Auswertung übernimmt, weitergeleitet werden. Dabei kann es sich insbesondere um einen Server im Supportcenter handeln. Die drahtlose Datenübertragung erleichtert zudem den Datenexport zum Supportrechner, da die fotografierten Bilddaten ohne Benutzung zusätzlicher Hardware weitergeleitet werden können.

Eine bevorzugte Weiterbildung des erfindungsgemäßen Verfahrens ist dabei, dass bei einem Ausfall der Kommunikationsschnittstelle die Bilddaten auf dem Speicher des mobilen Kommunikationsmittels zwischengespeichert und zu einem späteren Zeitpunkt exportiert werden. Sollte die Verbindung zum die Bilder verarbeitenden Zielserver zum Zeitpunkt der Aufnahme nicht gewährleistet sein, so können die Bilder zwischengespeichert und zu einem späteren Zeitpunkt zum Zielserver weitergeleitet werden: d.h. sobald die Kommunikationsschnittstelle wieder eine Verbindung zum Zielserver ermöglicht.

Eine bevorzugte Weiterbildung des erfindungsgemäßen Verfahrens ist dabei, dass die Funktionen der Bildaufnahme, Bildverarbeitung und des Datenexports des mobilen Kommunikationsmittels durch ein auf dem Kommunikationsmittel aktives Anwendungsprogramm mit grafischer Benutzeroberfläche gesteuert werden. Um dem Benutzer die Durchführung des Verfahrens zu vereinfachen, bietet es sich an, ein auf dem mobilen Kommunikationsmittel aktives Anwendungsprogramm zu benutzen, welches die Funktionen der Bildaufnahme und Verarbeitung sowie des Exports zum Zielserver nach vorheriger Konfiguration durch den Benutzer automatisch durchführt. Das Anwendungsprogramm kann dabei durch eine gezielt auf die Anforderungen angepasste grafische Benutzeroberfläche vom Benutzer bedient werden.

Eine bevorzugte Weiterbildung des erfindungsgemäßen Verfahrens ist dabei, dass das auf dem mobilen Kommunikationsmittel aktive Anwendungsprogramm die aufgenommenen maschinenlesbaren Datencodes dekodiert, mittels der so gewonnenen Informationen eine Voranalyse der Bilddaten durchführt und das Ergebnis der Voranalyse über die Benutzeroberfläche anzeigt. Bei Verwendung des bereits beschriebenen Anwendungsprogrammes ist es sinnvoll, eine Voranalyse der erfassten Bilddaten vor der eigentlichen Analyse auf dem Zielserver durchführen zu lassen, um dem Benutzer bereits erste Informationen über die erhaltene Druckqualität zu geben. Dabei sollte keine vollständige Analyse der erzeugten Bilddaten durchgeführt werden, da dies mit großer Wahrscheinlichkeit die Rechenkapazitäten der zugrundeliegenden Hardware, also des mobilen Kommunikationsmittels, übersteigt. Einzelne Qualitätsmerkmale, welche vom Anwendungsprogramm mit verhältnismäßig wenig Aufwand ermittelt werden können, sollten jedoch Bestandteil dieser Voranalyse sein. Diese bietet sich insbesondere an, wenn eine Verbindung zum verarbeitenden Rechner oder Server zu diesem Zeitpunkt nicht möglich ist.

Zur Durchführung des vorgestellten Verfahrens wird zudem eine Oberfläche mit einem Code zur Identifikation von Druckkontrollelementen offenbart. Sie besteht aus einem von Menschen lesbaren Identifikationscode und einem maschinenlesbaren Datencode. Der Identifikationscode beinhaltet spezifische Angaben zur Position des Druckkontrollelementes auf dem Drucksubstrat, der maschinenlesbare Datencode dagegen sowohl spezifische Druckauftragsinformationen, als auch den Identifikationscode selbst. Beide Codes sind auf dem Drucksubstrat neben das Druckkontrollelement platziert, dessen spezifische Informationen sie beinhalten. Sie können aber auch gleichzeitig Bestandteil des Druckkontrollelementes sein.

Eine bevorzugte Weiterbildung der erfindungsgemäßen Oberfläche mit einem Code ist dabei, dass der Identifikationscode aus 4 Teilen besteht, welche die relative Position und die Seite des Drucksubstrats, eine Angabe zur Position des Druckkontrollelements auf dem Drucksubstrat in einer Zone quer zur Druckrichtung, eine Angabe zur Position des Druckkontrollelements auf dem Drucksubstrat in einer Reihenfolge vom Druckanfang entlang der Druckrichtung, sowie die Art eines zu verwendenden Messgeräts enthalten. Mit diesen Angaben ist es dem Anwender möglich, das korrekte Druckkontrollelement für die Bildaufnahme der Qualitätskontrolle auszuwählen.

Eine bevorzugte Weiterbildung der erfindungsgemäßen Oberfläche mit einem Code ist dabei, dass der maschinenlesbare Datencode die Art des Druckkontrollelementes, die relative Position und Größe zum Mittelpunkt des Druckkontrollelementes, die Maschinennummer der Druckmaschine, die Auftragsnummer, den Identifikationscode, sowie aktuelles Datum und Uhrzeit beinhalten.
Diese Informationen werden für die automatisierte Auswertung der Bilddaten im Supportrechner benötigt. Da der maschinenlesbare Datencode Bestandteil der fotografierten Bilddaten ist, wird somit die Weiterleitung der Informationen an den Supportrechner gewährleistet.

Eine bevorzugte Weiterbildung der erfindungsgemäßen Oberfläche mit einem Code ist dabei, dass der maschinenlesbare Datencode die druckqualitätsrelevanten Parameter der Geschwindigkeit, Temperatur, Feuchtigkeit, sowie des Papier-/Substrattyps beinhaltet. Die Einbeziehung dieser Informationen verbessert die mögliche Fehlererkennung in der automatischen Auswertung durch den Supportrechner. Anders als die in der vorherigen Weiterbildung beschriebenen, auftragsbezogenen Informationen sind diese druckbezogenen Informationen direkt vom Druckprozess abhängig und müssen daher von der Druckmaschine on-the-fly hinzugefügt werden. Da dies eine Erweiterung des maschinenlesbaren Datencodes während des Drucks erfordert, ist dieses Vorgehen hauptsächlich für Digitaldruckmaschinen geeignet.

Das Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Fig. 1:: einen Druckbogen mit Druckkontrollelementen aus dem Stand der Technik
- Fig. 2:: ein erstes Beispiel für Druckkontrollelemente mit zugehörigem Ident- und maschinenlesbaren Datencode
- Fig. 3:: ein zweites Beispiel für Druckkontrollelemente mit zugehörigem Ident- und maschinenlesbaren Datencode
- Fig. 4:: einen bevorzugten Ablauf des Verfahrens zur Qualitätsdatenerfassung mit identifizierten Druckkontrollelementen
- Fig. 5:: einen Anwendungsfall für die Durchführung einer Remote Qualitätskontrolle

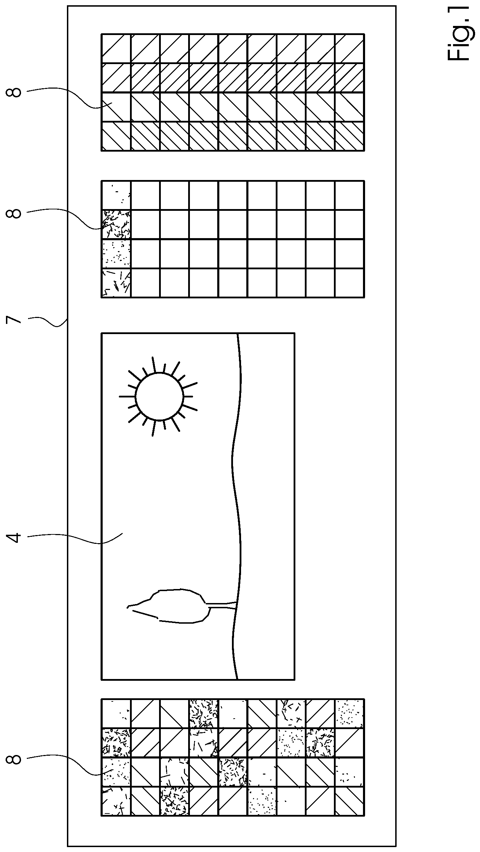

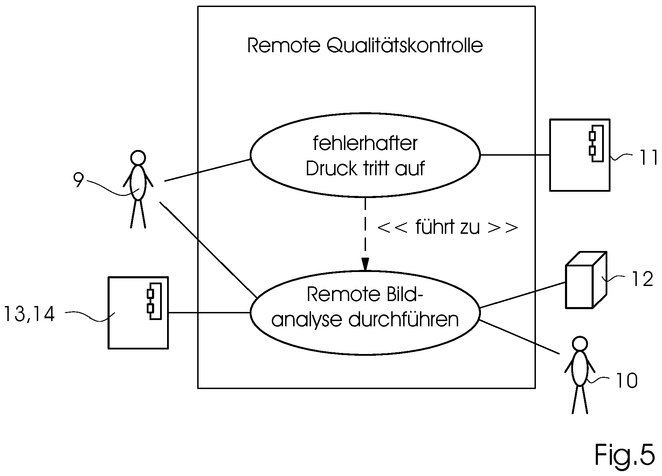

Figur 1 zeigt ein Beispiel für einen Druckbogen 7 mit Nutzen 11, in diesem Fall ein Bild, und außerhalb des Nutzens 11 angeordneten Druckkontrollelementen 8 - wie im Stand der Technik üblich. Welche und wie viele Druckkontrollelemente 8 auf dem Bogen 7 platziert werden, ist abhängig vom Nutzen 11, der Art des Druckprozesses und der Art der Qualitätskontrolle. Bei automatischen Qualitätskontrollsystemen, wie sie in größeren Druckmaschinen 11 integriert sind, werden die Kontrollelemente 8 von Kameras aufgenommen und die erzeugten Bilder entweder intern im Steuerungsrechner der Druckmaschine 11 oder an einem externen Server ausgewertet und die Ergebnisse auf einem Display dargestellt. Solche großen und kostenintensiven Druckmaschinen 11 sind jedoch insbesondere bei kleinen Druckereien, deren Umgebung beispielhaft in Figur 5 dargestellt ist, nicht verfügbar. Für die dort eingesetzten kleineren Druckmaschinen 11 ist aus Kostengründen ein alternatives Vorgehen notwendig.

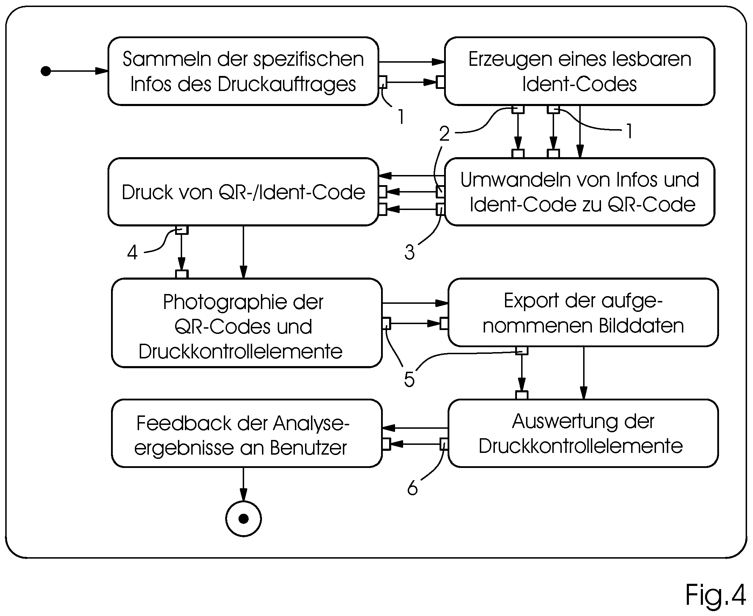

Im bevorzugten Ausführungsbeispiel, dessen Ablauf schematisch in Figur 4 dargestellt ist, wird dabei jedem Druckkontrollelement 8 ein von Menschen lesbarer Identifizierungscode 3 zugeordnet, mit welchem das Druckkontrollelement 8 eindeutig über verschiedene Druckseiten hinweg identifiziert werden kann. Der Identifizierungscode 3 enthält Angaben um dem Maschinenbediener 9 Anweisungen zur Orientierung geben zu können, wie er das Kontrollelement 8 zu fotografieren hat. Der Code 3 besteht aus 4 Teilen:
a) die Seite, d.h. die relative Nummer des Bogens 7 + Angabe zur Vorder- oder Rückseite ("F"=Front, "B"=Back)
b) einer zonalen Y-Angabe, quer zur Druckrichtung ausgehend vom unteren Bogenrand
c) einer alphanumerischen X-Angabe, d.h. die relative Nummer des Druckkontrollelements 8 auf dem Bogen 7 vom Druckanfang entlang der Druckrichtung
d) einer Angabe, welche Art des Messgerätes (Microscope Camera ("M") oder Densitometer "D") verwendet werden soll.

Beispiel: **3B:4:F-M** beschreibt das Druckkontrollelement 8 auf der Rückseite des 3. Bogens 7 in der Zone 4, Element 6, welches mit einer Kamera zu erfassen ist.

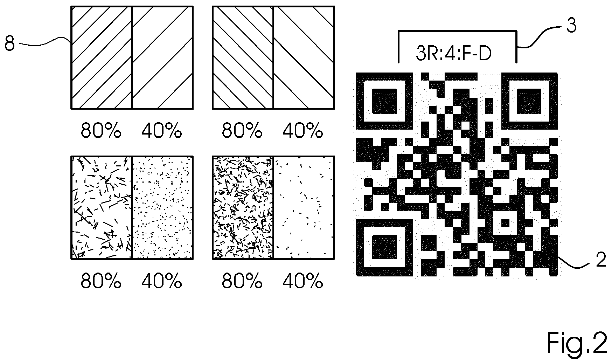

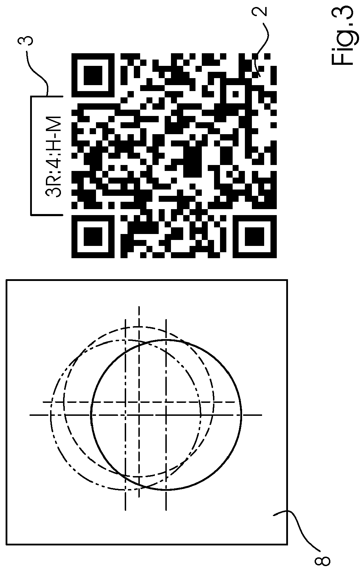

Unter dem Identifizierungscode 3 wird ein maschinenlesbarer Datencode 2 platziert, welcher Informationen 1 über die Art des Druckkontrollelements 8, die relative Position und Größe zum Mittelpunkt des maschinenlesbaren Datencodes 2 sowie die Maschinennummer der Druckmaschine, die Auftragsnummer (sofern bekannt), den Identifizierungscode 3, sowie das aktuelle Datum und die Uhrzeit enthalten. Der Code 2 kann z.B. aus einem QR-Code, einem Barcode oder einem Datamatrixcode bestehen und muss mittels bekannter OCR-Verfahren auslesbar sein. Figur 2 und Figur 3 zeigen zwei Beispiele für die Anordnung von Identifizierungscode 3 und maschinenlesbaren Datencode 2 neben einem Druckkontrollelement 8. Dabei ist es in einer alternativen Ausführungsvariante zudem möglich, dass der maschinenlesbare Datencode 2 Bestandteil des Druckkontrollelementes 8 ist.

Die Erstellung der Identifizierungscodes 3- und der maschinenlesbaren Datencodes 2 für jedes Druckkontrollelement 8 wird im Rahmen der Erstellung der Vorstufendaten des Druckauftrages durchgeführt.
In einem weiteren bevorzugten Ausführungsbeispiel werden zudem bei Verwendung einer Digitaldruckmaschine 11 weitere druckqualitätsrelevante Parameter des Druckvorgangs (z.B. Geschwindigkeit, Temperatur, Feuchtigkeit, Papier-/Substrattyp) dem maschinenlesbaren Datencode 2 hinzugefügt. Da die meisten dieser Parameter nur kurzfristig verfügbar sind, muss dies on-the-fly geschehen. Dazu sammelt der Steuerungsrechner der Druckmaschine 11 diese Informationen und modifiziert den maschinenlesbaren Datencode 2 indem er die gesammelten Informationen diesem hinzufügt.

Im zweiten Schritt des erfindungsgemäßen Verfahrens wird während der Bearbeitung des Druckauftrages in, vom Anwender festgelegten Abständen, eine Qualitätskontrolle durchgeführt. Die mögliche Spanne reicht dabei von der Durchführung nur bei sichtbaren Qualitätsmängeln im Nutzen bis hin zur Kontrolle jedes Druckbogens 7. Die Entscheidung darüber liegt beim Anwender 9. Entscheidet er sich zur Durchführung so fotografiert er mittels eines mobilen Kommunikationsmittels mit Kamerafunktion 13, also z.B. eines handelsüblichen Smartphones oder Tablet-Computers, das Druckkontrollelement 8 des zu prüfenden Druckbogens 7, bzw. Druckbogenausschnittes 4, sowie den zugehörigen maschinenlesbaren Datencode 2. Die notwendigen Positionsangaben sind dem Identifizierungscode 3 zu entnehmen. Falls die aufgetretenen Mängel nur im Nutzen 4 des Druckproduktes vorhanden sind, kann auch die betreffende Stelle des Nutzens mit fotografiert werden. Das so erzeugte Bild 5 wird über die drahtlose Kommunikationsschnittstelle des Smartphones 13 an einen Rechner 12 im Supportcenter weitergeleitet. Die Steuerung der Kamera des Smartphones 13, sowie die Weiterleitung der erzeugten Bilddaten 5 werden dabei von einem für diesen Zweck erstellten Anwendungsprogramm, welches auf dem Smartphone 13 läuft, übernommen. Dieses Anwendungsprogramm wird vom Nutzer 9 über eine grafische Benutzeroberfläche (GUI) hinsichtlich der Umgebungsparameter (IP-Adresse, Zielserver, etc.) konfiguriert. Falls die Nutzdaten 4 mit in die Analyse miteinbezogen werden sollen, muss der Anwender 9 dies ebenfalls dem Anwendungsprogramm mitteilen. Das Programm gibt zudem, je nach Ausführung, dem Nutzer 9 über die GUI Hilfestellung bei Konfiguration und Anwendung. Als Nächstes dekodiert das Anwendungsprogramm den maschinenlesbaren Datencode 2 und verknüpft die so gewonnen Informationen mit den Bilddaten 5. Je nach Konfiguration ist es zudem in der Lage eine Voranalyse hinsichtlich der Druckqualität der aufgenommenen Bilddaten 5 durchzuführen und die Ergebnisse dem Nutzer 9 zusammen mit den Informationen des maschinenlesbaren Datencodes 2 über die GUI anzuzeigen. Der Umfang der Voranalyse hinsichtlich welche Daten analysiert werden sollen, ist dabei konfigurierbar. Der Sinn einer solchen Voranalyse hängt zudem stark von der Rechenleistung des benutzten Smartphones 13 ab. Ist sie zu schwach, wird der Zeitaufwand für die Voranalyse zu groß, bzw. der Informationsgewinn, welcher in einer vertretbaren Zeit möglich ist, zu gering. Insbesondere für den Fall einer Unterbrechung der Datenverbindung zum Supportrechner 12 bleibt die Voranalyse jedoch ein wichtiges Element, um dem Nutzer 9 sofort eine Einschätzung der Druckqualität zu ermöglichen. Zudem werden die Bilddaten 5 bei einer Unterbrechung der Datenverbindung auf dem Speicher des Smartphones 13 zwischengespeichert, und dann nach Wiederherstellung der Datenverbindung zum Rechner 12 im Supportcenter gesendet. Sind die Bilddaten 5 im Supportcenter angekommen werden sie unter Mithilfe der aus dem maschinenlesbaren Datencode 2 gewonnen Informationen bzgl. Druckfehler analysiert. Die Analyseergebnisse 6, d.h. die gefundenen Druckfehler samt möglicher Ursache, werden dann über die noch bestehende oder wieder aufzubauende Datenverbindung zum Smartphone 13 gesendet. Dort werden sie über die GUI des Anwendungsprogrammes den Nutzer 9 zur Verfügung gestellt. Dieser hat dann die Möglichkeit, die notwendigen Korrekturen an den Einstellungen der Druckmaschine 11 vorzunehmen.

### Bezugszeichenliste

- 1: Druckauftragsinformationen
- 2: maschinenlesbarer Datencode für jedes Kontrollelement
- 3: Ident-Code für jedes Kontrollelement
- 4: gedrucktes Bild (Nutzen)
- 5: fotografierte Bilddaten
- 6: Analyseergebnisse
- 7: Druckbogen
- 8: Druckkontrollelement
- 9: Drucker (Anwender)
- 10: Support-Mitarbeiter
- 11: Druckmaschine
- 12: Support-Rechner
- 13: mobiles Kommunikationsmittel mit Kamera
- 14: Smartphone-Adapter

## Patentansprüche

1. Verfahren zur Identifikation von Druckkontrollelementen (8) in Form von Farbmesstreifen für die Qualitätsdatenerfassung, die folgenden Schritte umfassend:
• Kodieren von spezifischen Angaben zur Position des Druckkontrollelementes (8) in Form einer relativen Position und einer Seite des Drucksubstrats, einer Angabe zur Position des Druckkontrollelements (8) auf dem Drucksubstrat in einer Zone quer zur Druckrichtung und einer Angabe zur Position des Druckkontrollelements (8) auf dem Drucksubstrat in einer Reihenfolge vom Druckanfang entlang der Druckrichtung, sowie der Art eines zu verwendenden Messgerätes als Text in einen vierteiligen Identifikationscode (3)
• Kodieren von spezifischen Druckauftragsinformationen (1) und des Identifikationscodes (3) als Barcode in einen Datencode (2)
• Positionieren des Codes (2) und des Identifikationscodes (3) neben ihrem zugehörigen Druckkontrollelement (8) auf dem Drucksubstrat
• Fotografieren des gedruckten Druckkontrollelementes (8) und des nebenstehenden maschinenlesbaren Datencodes (2) mittels der Angaben des nebenstehenden Identifikationscodes (3), indem ein Maschinenbediener (9) dem Identifikationscode (3) Angaben entnimmt, wie er das Kontrollelement (8) zu fotografieren hat, und Verarbeiten der Daten mit einem mobilen Kommunikationsmittel (13) mit Kamerafunktion und einer Kommunikationsschnittstelle
• Exportieren der erzeugten Bilddaten (5) auf einen Supportrechner (12) über die Kommunikationsschnittstelle des mobilen Kommunikationsmittels (13)
• Dekodieren der maschinenlesbaren Datencodes (2)
• Analysieren der Bilddaten (5) auf dem Supportrechner (12) mittels der aus dem dekodierten maschinenlesbaren Datencode (2) gewonnenen Informationen
• Übermittlung der Analyseergebnisse (6) vom Supportrechner (12) an das mobile Kommunikationsmittel (13) und Darstellung der Analyseergebnisse (6) via grafischer Benutzeroberfläche des mobilen Kommunikationsmittels (13)
• Korrektur der anhand der Bildanalyse gefundenen Fehleinstellungen in der die Druckerzeugnisse produzierenden Druckmaschine (11) durch den Maschinenbediener (9)

2. Verfahren nach Anspruch 1,
**wobei**
zusätzlich zum Datencode (2), zum Identifikationscode (3) und zum Druckkontrollelement (8) auch der gedruckte Nutzen (4) mit in die Qualitätsdatenerfassung einbezogen wird.

3. Verfahren nach Anspruch 1 oder Anspruch 2,
**wobei**
es sich bei der Kommunikationsschnittstelle des mobilen Kommunikationsmittels (13) um eine drahtlose Datenübertragung, insbesondere nach einem Mobilfunkstandard, handelt.

4. Verfahren nach einem der vorherigen Ansprüche,
**wobei**
bei einem Ausfall der Kommunikationsschnittstelle die Bilddaten (5) auf dem Speicher des mobilen Kommunikationsmittels (13) zwischengespeichert und zu einem späteren Zeitpunkt exportiert werden.

5. Verfahren nach einem der vorherigen Ansprüche,
**wobei**
die Funktionen der Bildaufhahme, Bildverarbeitung und des Datenexports des mobilen Kommunikationsmittels (13) durch ein auf dem Kommunikationsmittel (13) aktives Anwendungsprogramm mit grafischer Benutzeroberfläche gesteuert werden.

6. Verfahren nach Anspruch 5,
**wobei**
das auf dem mobilen Kommunikationsmittel (13) aktive Anwendungsprogramm die aufgenommenen Datencodes (2) dekodiert, mittels der so gewonnenen Informationen eine Voranalyse der Bilddaten durchführt und das Ergebnis der Voranalyse über die grafische Benutzeroberfläche anzeigt.

## Claims

1. Method for identifying print control elements (8) in the form of colour measurement strips for obtaining data on quality, comprising the following steps of
• encoding specific information on the position of the print control element (8) as text in a four-part identification code (3), said specific information in the form of a relative position and a side of the printing substrate, information on the position of the print control element (8) on the printing substrate in a zone transverse to the printing direction and information on the position of the print control element (8) on the printing substrate in an order from the print start along the printing direction as well as the type of measurement device to be used
• encoding specific print job information (1) and the identification code (3) as a bar code into a data code (2)
• positioning the data code (2) and the identification code (3) next to the associated print control elements (8) thereof on the printing substrate
• photographing the printed print control element (8) and the adjacent machine-readable data code (2) by means of the information of the adjacent identification code (3) in that a machine operator (9) obtains information on how to photograph the control element (8) from the identification code (3), and processing the data using a mobile communication device (13) that has a camera function and a communication interface
• exporting the generated image data (5) to a support computer (12) via the communication interface of the mobile communication device (13)
• decoding the machine-readable data code (2)
• analysing the image data (5) on the support computer (12) by means of the information obtained from the decoded machine-readable data code (2)
• forwarding the results (6) of the analysis from the support computer (12) to the mobile communication device (13) and presenting the results (6) of the analysis via the graphical user interface of the mobile communication device (13)
• correcting the faulty settings found as a result of the analysis of the image on the printing machine (11) that produces the printed products in that the machine operator (9) makes corrections

2. Method according to claim 1,
wherein along with the data code (2), identification code (3) and print control element (8), the printed copy (4) of the image is factored into the process of obtaining data on quality.

3. Method according to claim 1 or claim 2,
wherein the communication interface of the mobile communication device (13) is wireless data transfer, in particular a mobile telecommunications standard.

4. Method according to any one of the preceding claims,
wherein in the case of a failure of the communication interface, the image data (5) are buffered in the memory of the mobile communication device (13) and exported at a later time.

5. Method according to any one of the preceding claims,
wherein the functions of the mobile communication device (13) of recording the image, processing the image and exporting the data are controlled by an application programme active on the mobile communication device (13) and having a graphical user interface.

6. Method according to claim 5,
wherein the application programme (13) active on the mobile communication device (13) decodes the recorded data codes (2), uses the information obtained in this way to pre-analyze the image data and displays the pre-analysis result on the graphical user interface.

## Revendications

1. Procédé pour l'identification d'éléments de contrôle d'impression (8) sous forme de barres de couleurs pour l'enregistrement des données de qualité, incluant les étapes suivantes :
• Codage d'indications spécifiques concernant la position de l'élément de contrôle d'impression (8) sous forme d'une position relative et d'un côté du support d'impression, d'une indication sur la position de l'élément de contrôle d'impression (8) sur le support d'impression dans une zone perpendiculaire au sens d'impression et d'une indication sur la position de l'élément de contrôle d'impression (8) sur le support d'impression dans un ordre depuis le début de l'impression le long du sens d'impression, ainsi que du type d'un appareil de mesure à utiliser, sous forme de texte dans un code d'identification en quatre parties (3)
• Codage d'informations spécifiques sur le travail d'impression (1) et du code d'identification (3) sous forme de code-barres dans un code de données (2)
• Positionnement du code (2) et du code d'identification (3) à côté de leur élément de contrôle d'impression (8) associé sur le support d'impression
• Photographie de l'élément de contrôle d'impression (8) imprimé et du code de données lisible à la machine (2) au moyen des indications du code d'identification (3) juxtaposé, un opérateur (9) déduisant du code d'identification (3) des indications sur la manière dont il doit photographier l'élément de contrôle (8), et traitement des données avec un moyen de communication mobile (13) avec fonction d'appareil photo et une interface de communication
• Exportation des données images (5) générées sur un ordinateur support (12) via l'interface de communication du moyen de communication mobile (13)
• Décodage du code lisible à la machine (2)
• Analyse des données images (5) sur l'ordinateur support (12) au moyen des informations obtenues à partir du code de données lisible à la machine (2) décodé
• Transmission des résultats de l'analyse (6) de l'ordinateur support (12) au moyen de communication mobile (13) et représentation des résultats d'analyse (6) via l'interface utilisateur graphique du moyen de communication mobile (13)
• Correction des réglages erronés détectés sur la base de l'analyse de l'image dans la machine à imprimer (11) produisant les imprimés par l'opérateur (9)

2. Procédé selon la revendication 1,
**pour lequel**
en supplément du code de données (2), du code d'identification (3) et de l'élément de contrôle d'impression (8), la pose imprimée (4) est également incluse dans l'enregistrement de la qualité.

3. Procédé selon la revendication 1 ou la revendication 2,
**pour lequel**
l'interface de communication du moyen de communication mobile (13) est une transmission de données sans fil, conforme notamment à une norme de radiocommunication.

4. Procédé selon l'une des revendications précédentes,
**pour lequel**
en cas de défaillance de l'interface de communication, les données images (5) font l'objet d'un stockage intermédiaire dans la mémoire du moyen de communication mobile (13) et sont exportées ultérieurement.

5. Procédé selon l'une des revendications précédentes,
**pour lequel**
les fonctions de prise de vue, traitement de l'image et de l'exportation de données du moyen de communication mobile (13) sont pilotées par un programme d'application avec interface utilisateur actif sur le moyen de communication (13).

6. Procédé selon la revendication 5,
**pour lequel**
le programme d'application actif sur le moyen de communication mobile (13) décode les codes enregistrés (2), effectue au moyen des informations ainsi obtenues une analyse préliminaire des données images et affiche le résultat de l'analyse préliminaire via l'interface utilisateur graphique.
